# EUROPEAN PATENT APPLICATION

(11) **EP 4 759 544 A1**
(43) Date of publication of application: **17.06.2026**
(21) Application number: 25222432.4
(22) Date of filing: 11.12.2025
(51) Int. Cl.: B41F 33/00, H04N 1/00, G06T 7/00, B41J 2/21, B41F 19/00

(54) **PRINTING INSPECTION SYSTEM AND METHOD**

(30) Priority: 12.12.2024 EP 24219458
(71) Applicant: Tetra Laval Holdings & Finance S.A., 1009 Pully (CH)
(72) Inventor: SHOURVARZI, Keyvan, 221 86 Lund (SE); BÄCKMAN, Martin, 221 86 Lund (SE); AFANASIEV, Alexey, 221 86 Lund (SE)
(74) Representative: Tetra Pak Patent Attorneys

(57) **Abstract**

A method for quality inspection of a series of printed images, the method comprising:
feeding (S2) a printed paperboard web (100) continuously in a machine direction (MD),
capturing (S4a) a first test image of a first subsection (110) of the paperboard web (100),
capturing (S4b) a second test image of a second subsection (120) of the paperboard web (100), the second subsection (120) being arranged remote from to the first subsection (110),
determining (S6) the quality of the series of printed images by comparing the first and second test image with at least one master image.

## Description

### Technical Field

The invention relates to a system and method for quality inspection of a printed paperboard web.

### Background Art

Packaging containers of the single use disposable type for liquid foods are often produced from a laminated packaging material. The laminated packaging material is produced as a continuous web, which is either used in a roll-fed filling machine or cut into separate blanks for use in a blank-fed packaging machine.

The laminated packaging material is produced using a converting procedure in which multiple materials are joined and processed to form the ready-to-use web of laminated packaging material.

During the converting process a paperboard web, forming the core layer of the laminated packaging material, may be digitally printed with an image on the outside (i.e. the side intended as the exterior side of the laminated packaging material) for example by ink-jet printing.

Defects may arise during printing. It is important to be able to detect such defects in order to ensure a desired quality of the packaging material web and optimum print quality performance of the digital printing process.

Current techniques for static imaging rely e.g., on static printing, i.e. printing a repetitive pattern of the same image, it is known to use an image inspection technique wherein each image is inspected and compared to a master image. The quality of the print is determined based on potential discrepancies between the printed images and the master image. Current techniques for dynamic imaging, rely for print defect detection on printed test patterns that either need to be removed, adding complexity to the manufacturing process, or stay on the manufactured packaging container, impairing the visual impression. Other current techniques rely on more complex, and expensive setups. However, comparing every image against a master image is data heavy and time consuming. For dynamic printing, i.e. printing variable images after each other on the same roll, the data handling and processing time are increased even more, slowing down the overall printing process.

Thus, there is a need in the art for improvements of quality inspection techniques for printing laminated packaging material webs, especially with regards to dynamic printing.

### Summary

It is an object of the invention to at least partly overcome one or more of the above-identified limitations of the prior art. In particular, it is an object to provide a fast and efficient method for detecting printing defects on a printed paperboard web.

According to an aspect, a method for quality inspection of a series of printed images is provided. The method comprises feeding a printed paperboard web continuously in a machine direction. The method further comprises capturing test images. By determining the quality based on captured test images, a more accurate quality control can be achieved than what is achieved by human visual inspection of the printed paperboard web. The method comprises capturing a first test image of a first subsection of the paperboard web and capturing a second test image of a second subsection of the paperboard web. Advantageously, by capturing a first and second test image, an efficient quality inspection based on captured subsections instead of the full printed paperboard web is facilitated. Capturing the full printed paperboard web would be data heavy and time consuming, by sampling the web, a faster quality inspection may be achieved. The second subsection is arranged remote from to the first subsection. By this, quality inspection of dynamic printing is enabled. Variable images may be printed after each other on the same roll, and sample images throughout the roll may be compared to at least one master image. The method further comprises determining the quality of the series of printed images by comparing the first and second test image with at least one master image. Advantageously, the method eliminates the need for a dedicated test pattern printed on the paperboard web, improving the visual impression of the final product.

According to an embodiment, the at least one master image is a computer generated image. In cases where the paperboard web is digitally printed, a digital-based image used for printing may also be used as a master image for quality inspection. Alternatively, or additionally, a computer generated image may be modified before being provided as a master image for quality inspection.

According to an embodiment, the method further comprises capturing the at least one master image of at least one master subsection of the paperboard web, the at least one master subsection being prior to the first and second subsections in the machine direction. By capturing the master image of a subsection of the paperboard web, a simple process for generating a master image is enabled.

According to an embodiment, the method further comprises selecting one or more images from a series of motive images, and printing said selected one or more images at predetermined positions on the paperboard web. The first and second subsection may comprise at least one predetermined position on the paperboard web.

Analogously, the method may comprise selecting one or more images from a series of motive images, and printing said selected one or more images at predetermined positions on the paperboard web. The at least one master subsection may comprise at least one predetermined position on the paperboard web. By this, a well-controlled quality inspection is allowed.

According to an embodiment, the method further comprises masking a third subsection of the paperboard web, the third subsection comprising no predetermined position. By this, it is ensured that unnecessary data is neither collected nor processed, ensuring a fast and efficient quality inspection.

According to an embodiment, the paperboard web comprises a number of inspection intervals, wherein each inspection interval comprises a number of subsections. The first subsection may equal the first subsection in a first inspection interval, and the second subsection may equal the first subsection in a second inspection interval.

According to an embodiment, the step of determining the quality of the series of printed images may comprise the first test image being compared to a first master image and the second test image being compared to a second master image. By this, accuracy of the quality inspection is increased, even during variable printing where more than one motive images are used for printing variable images within the series of printed images.

According to an embodiment, the first and second master image is retrieved from a master image library. The master image library may comprise various master images, captured, computer generated and/or computer modified. When a test image is captured, it may be compared to a corresponding master image from the master image library.

According to an embodiment, the at least one master image is color managed. Color management as disclosed herein refers to the controlled conversion between the color representations of various devices, such as monitors, capturing devices and printers. The primary goal of color management is to obtain a good match across color devices; for example, the colors of an image should appear the same on a computer monitor and as a printed paperboard web.

According to an aspect, a converting unit, configured to continuously manufacture a laminated packaging material, is provided. The converting unit comprises a feeding unit configured to continuously forward a printed paperboard web in a machine direction, preferably at a constant speed. The converting unit further comprises an inspection unit configured to capture a plurality of test images of nonadjacent subsections of the paperboard web, and further configured to compare the plurality of test images with at least one master image. The converting unit may be configured to perform the continuous in-line method for quality inspection described herein and therefore implies all aspects disclosed with regard to that method.

The converting unit may further comprise a creasing station configured to provide a crease line pattern to the printed paperboard web, and/or at least one lamination station configured to laminate at least a further layer to the printed and creased paperboard web.

According to an embodiment, the converting unit further comprises a printing unit configured to print the paperboard web. The printing unit may be configured to print a series of images on the paperboard web.

According to an embodiment, the inspection unit is further configured to capture the master image.

According to an embodiment, the printed paperboard web comprises a cyclically repeated pattern of subsections.

According to an embodiment, the plurality of test images are captured at specific intervals within the cyclically repeated pattern of subsections.

All possible features mentioned above should be assumed as valid for all aspects of the invention, as long as being under the scope of the claims. Still other objectives, features, aspects and advantages of the invention will appear from the following detailed description as well as from the drawings.

### Brief Description of the Drawings

Embodiments of the invention will now be described, by way of example, with reference to the accompanying schematic drawings.
Fig. 1 is a schematic view of a converting unit according to an embodiment,
Fig. 2 is a top view of a paperboard web moving through a part of the converting unit of Fig. 1, and
Fig. 3 is a top view of a paperboard web moving through a part of the converting unit of Fig. 1, and
Fig. 4 is a flow chart of a method for quality inspection according to an embodiment, and
Fig. 5 is a flow chart of a method for quality inspection according to an embodiment.

### Detailed Description

A package, such as a liquid food or beverage container, is formed by folding blanks of a laminated packaging material. The packaging material is typically manufactured in a manufacturing unit, such as a converting unit. During the manufacturing process, a substrate may be printed, and after a series of process steps, eventually forming part of the laminated packaging material. In the following description, the substrate is referred to as a paperboard material. To inspect the quality of the print and detect eventual defects, an in-line method and system for quality inspection is provided, which will be described in the following.

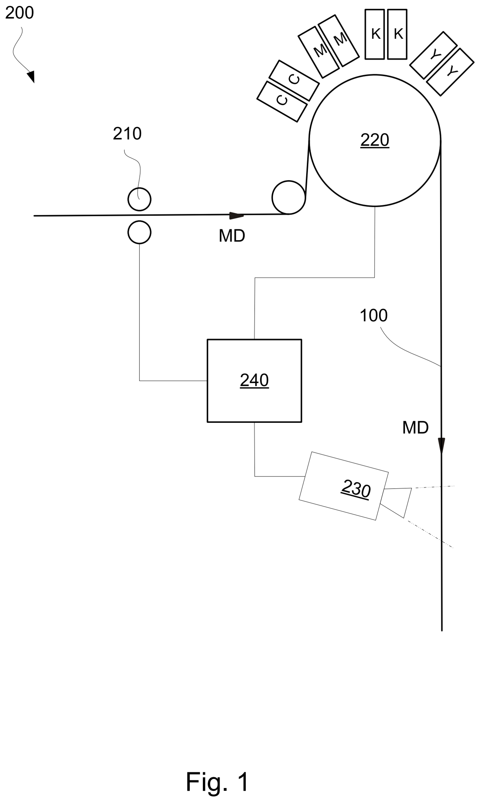

With reference to Fig. 1 a converting unit 200 configured to manufacture a laminated packaging material web is illustrated. The converting unit 200 comprises at least one feeding unit 210, here illustrated as two feeding rolls. The feeding unit(s) 210 is configured to continuously forward a paperboard web 100 in a machine direction MD as indicated by the arrow markings in Fig. 1, preferably at a substantially constant speed.

The converting unit 200 in the illustrated example further comprises a printer unit 220, here illustrated as an ink-jet printer having a support cylinder and a plurality of print heads for cyan C, magenta M, yellow Y and black K. It should be noted that the exact configuration of the printer unit 220 may be different depending on the particular application; for example, the printer unit 220 may comprise a flexographic printer. The printer unit 220 is configured to print a series of images on the paperboard web 100. The series of images may comprise a repeating pattern of the same image, so called static printing, or variable images after each other, i.e. dynamic printing.

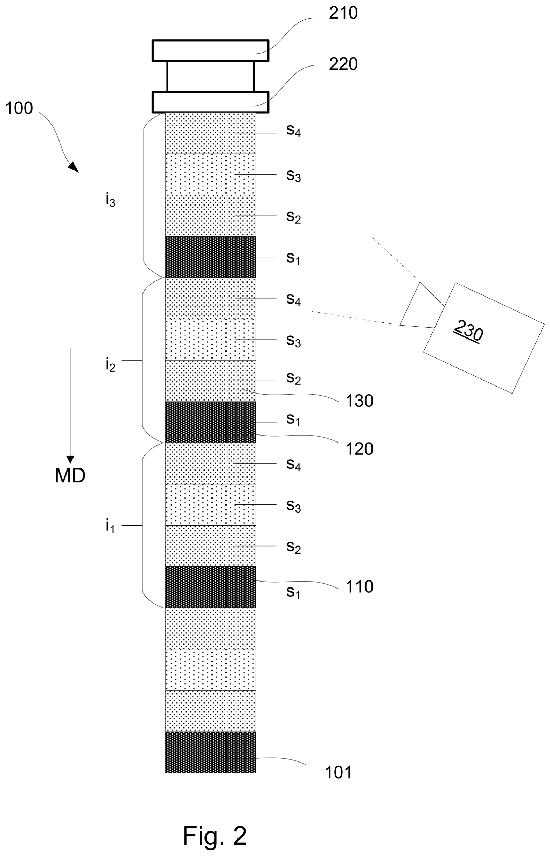

Fig. 2 illustrates the converting unit in a top view. Here, the feeding unit 210 forwards the paperboard web 100 in a machine direction MD, as indicated by an arrow in the figure. The printer unit 220 prints a cyclic pattern of variable images, or subsections s₁₋₄, repeating in an interval i₁₋₃ of four subsections s₁₋₄ such that the first subsection s₁ of each interval i₁₋₃ is printed with the same image motive. It should be realized that a number of different patterns may be printed by the printer unit 220. The repeating interval i₁, ..., iₘ may comprise a lower or higher number n or subsections s₁, ..., sₙ, and the number m of inspection intervals i₁, ..., iₘ may vary. As an example, each interval i₁, ..., iₘ may comprise a single subsection s₁, resulting in a paperboard web printed with a series of the same image, i.e. static printing.

In other words, a series of printed images are distributed along the machine direction MD of the paperboard web 100. The printed images in the series may be printed on separate subsections s₁₋₄. The printed images are configured to form part of the décor for one or more packages. This means that the printed images are printed on sections which are meant to be visible to the consumer after finished packages have been formed from the paperboard web. The printed images should thereby not be confused with test patterns, which are printed for inspection purposes rather than as décor for the packages and which are typically configured to be hidden in the finished packages.

Turning back to Fig. 1, downstream of the printer unit 220, the converting unit 200 further comprises an inspection unit 230 which is configured to capture a plurality of test images of nonadjacent subsections 110, 120 of the printed paperboard web. As further illustrated in Fig. 2, the inspection unit 230 is configured to capture test images of the first subsection s₁ of the first and second inspection interval i₁, i₂. The inspection unit 230 may further capture test images of the first subsection s₁ of further inspection intervals i₃, ..., iₘ. Alternatively, or additionally, the inspection unit 230 may be configured to capture another subsection s₂, ..., sₙ, of each inspection interval i₁, ..., iₘ. Test images of more than one subsection s₁, ..., sₙ may be captured of each inspection intervals i₁, ..., iₘ. The inspection unit 230 is further configured to compare the plurality of test images with a master image and thereby inspect the quality of the print. For instance, the inspection unit 230 may analyze different characteristics of the test image compared to the master image, such as color, continuity, opacity, color intensity, blurriness, etc. An in-line defect inspection system in the form of the inspection unit 230 is able to detect errors in the printing process by comparing test images captured across the entire package with at least one master image. The test images may be captured of subsections s₁ comprising the same image motive, and they may be compared to one single master image. Alternatively, the test images may be captured of a number n or subsections s₁, ..., sₙ comprising different image motives, and they may be compared to more than one corresponding master image. As a result, quality inspection, also referred to as print defect detection, is provided, with full print design variability.

Before capturing the test images of the first and second subsections 110, 120, the inspection unit 230 may capture a master image of a master subsection 101 of the paperboard web, the master subsection being prior to the first and second subsections 110, 120 in the machine direction MD. In one example, the master image, the first test image and the second test image are all captured of the first subsection s₁ of three different inspection intervals i₁₋₃. In another example, not illustrated, a first master image is captured of a first subsection s₁ in a first inspection interval i₁, a second master image is captured of a second subsection S₃ in the first inspection interval i₁, the first test image is captured of a first subsection s₁ in a second inspection interval i₂, and the second test image is captured of a second subsection s₃ in the second inspection interval i₂.

A controller 240 may be provided in, or in conjunction with (such as remote from), the converting unit 200 to control the operation of the inspection unit 230. For instance, the controller 240 may be a digital processing unit or the like. The controller 240 may also be in electronic communication with the feeding unit(s) 210 as well as the printer unit 220 to control their respective function.

In one embodiment, the inspection unit 230 comprises a camera. The inspection unit 230 is configured to take an image of the first and second subsections 110, 120 and possibly further subsections s₁, ..., sₙ of the printed paperboard web 100. The inspection unit 230 or the controller 240 may be configured to analyze the image from the inspection unit 230 by comparing them with at least one master image, such as a reference image of 100% well-functioning printer unit 220. If the captured image comprises deviations from the master image, these deviations are processed and analyzed in order to determine errors in the manufacturing process. The errors may be associated with defects in the printer unit 220 or other units of manufacturing process. In other embodiments the inspection unit 230 may comprise other means for visual inspection.

The printed paperboard web 100 is commonly divided into a plurality of paperboard web sections. The sections may also be referred to as blanks from which a package is to be formed, especially if the web of packaging material later is cut into individual sections for a blank-fed packaging machine. The subsections s₂, ..., sₙ herein may correspond to these sections, or blanks. Alternatively, subsections s₂, ..., sₙ herein may correspond to different parts of the blank and the package to be formed, preferably separated by crease lines. The crease lines may for instance be formed in a creasing unit (not illustrated) of the converting unit 200. Alternatively, the subsections s₂, ..., sₙ herein may correspond to larger sections than the blanks. Commonly, a test pattern is printed on each section of the web, either on a section that is cut off before forming the package which increases complexity of the process, or on a section that will be visible on the formed package, reducing the visual impression of the final product. Advantageously, the quality inspection method as described herein allows for inspection of the print quality without requiring a dedicated test pattern to be printed on the paperboard web.

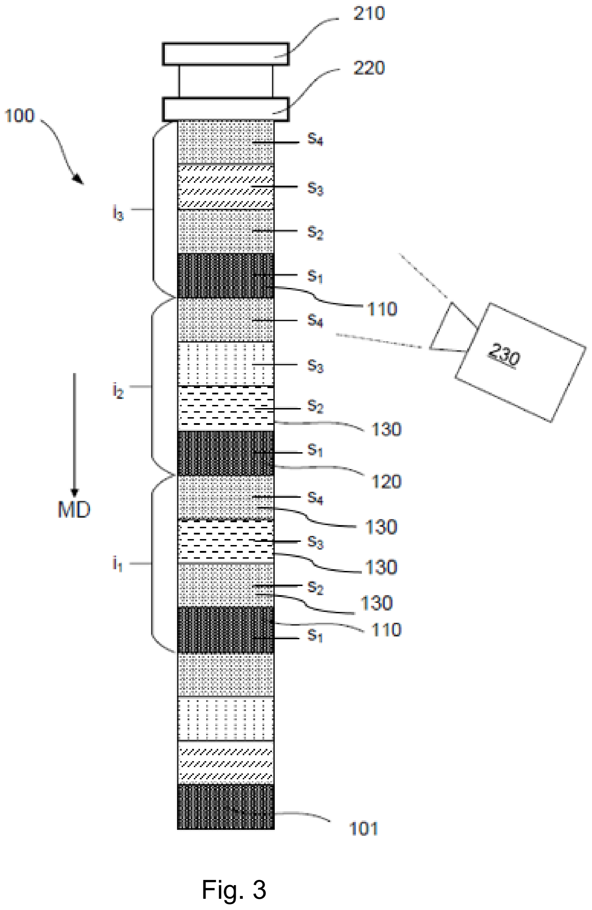

Fig. 3 illustrates another example of a printed paperboard web 100 traveling though part of the converting unit of Fig. 1. Like in the example shown in Fig. 2, the paperboard web 100 is printed with a series of printed images distributed along the machine direction MD of the paperboard web 100. In this example, the series of images comprises variable images of more than one motive and are printed one after another in the machine direction MD on subsections s₁-s₄ of the web 100. Each printed image in the series is configured to form part of the décor for one or more packages. The printed paperboard web 100 is fed continuously by the feeding unit 210 in the machine direction MD. As the web moves forward in the machine direction MD, the inspection unit 230 captures a first test image of a first subsection 110 comprising at least part of a printed image in the series of printed images and then captures a second test image of a second subsection 120 comprising at least part of another printed image in the series of printed images. In this case, the first subsection 110 corresponds to the first subsection s₁ in a first inspection interval i₁ and the second subsection 120 corresponds to the first subsection s₁ in a second inspection interval i₂.

The first and second subsections 110, 120 are separated in the machine direction MD by at least one third subsection 130, where each third subsection 130 comprises a printed image in the series of printed images. In this case, each of the second, third and fourth subsections s₂₋₄ of the first inspection interval i₁ is a third subsection 130. The inspection unit 230 is configured to skip the third subsection(s) 130, i.e. not capture any images of the printed images in these subsections 130.

The inspection unit 230 is further configured to determine the quality of the series of printed images by comparing the first and second test image with at least one master image. Since the test images are captured of subsections which are separated by at least some printed images in the series, this means that not all printed images in the series will be inspected, which saves a lot of processing time.

The printed paperboard web 100 is generally divided in the machine direction MD into a plurality of blanks, where each blank is configured to form an individual package and comprises at least one printed image in the series of printed images. The first, second and one or more third subsections 110, 120, 130 can correspond to or be located within individual blanks. Since the third subsection(s) 130 are skipped, this means that not all blanks are inspected, which can save a lot of processing time.

Unlike the example in Fig. 2, all subsections s₁₋₄ are not repeated in each interval i₁₋₃. Rather, only the image(s) in the first subsection s₁ of each interval i₁₋₃ is repeated while images in the second, third and fourth subsections s₂₋₄ of each interval i₁₋₃ are printed in a random or pseudo-random order. Since the images in these subsections are not subject to inspection, it is not necessary to print them in a predetermined or repetitive manner.

Accordingly, only some images in the series may be printed at predetermined positions, in this case the images within the first subsections s₁ of each interval i₁₋₃ which corresponds to the first and second subsection 110, 120, respectively. On the other hand, images which are printed in third subsections 130 and thereby not inspected may be printed in a random or pseudorandom order.

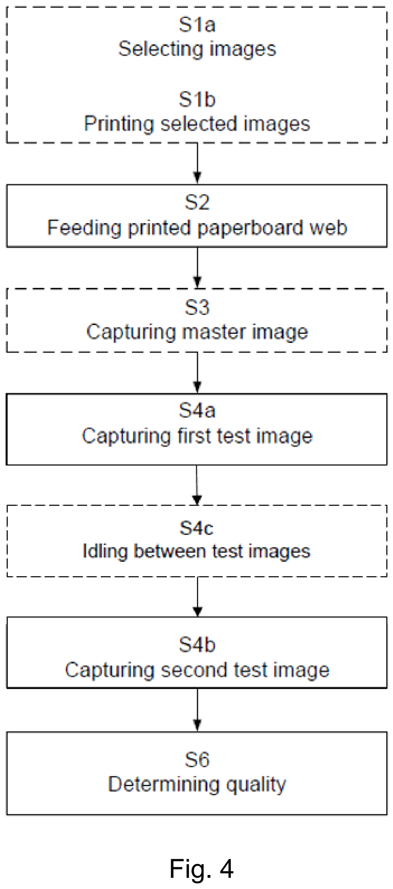

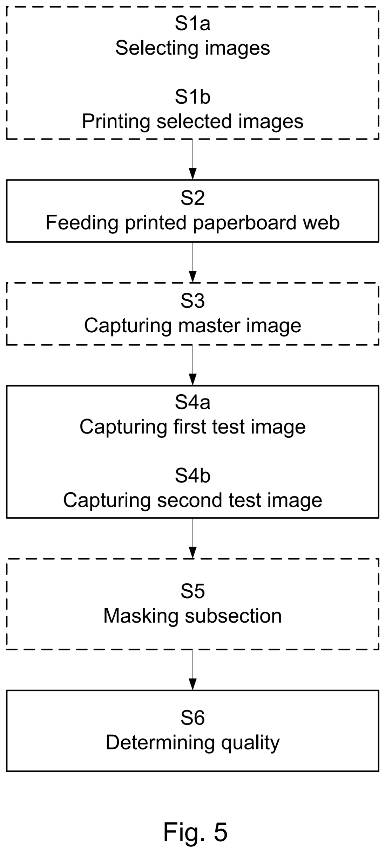

Turning now to Fig. 4 and 5 embodiments of a continuous in-line method for quality inspection of a series of printed images on a paperboard web 100 is illustrated. The method may be performed in the converting unit 200 as described above. Conversely, the converting unit 200 is configured to perform the method as will now be described. Moreover, all aspects disclosed with regard to the method may be implied also for the converting unit 200, as well as the other way around.

The method includes an optional step of selecting S1a one or more images from a series of motive images, and printing S1b the selected images one or more images at predetermined positions on a paperboard web 100, preferably by a printer unit 220. Further images may be printed on the same paperboard web 100 as the selected images. The images may be printed by a digital printing technique such as ink-jet printing. During ink-jet printing, a digital image is recreated by propelling droplets of ink onto a substrate, such as a paperboard web 100 or a primer layer (not shown) on a paperboard web 100. The method may further comprise other printing techniques, such as flexographic printing, and the paperboard web 100 may hence be printed by ink-jet printing only, or by a hybrid approach combining two or more printing techniques. In other words, paperboard layer 100 may be ink-jet printed and flexography printed.

The paperboard layer 100 may comprise paper, paperboard or other cellulose-based material. The paperboard layer 100 may comprise a number m of inspection intervals i₁, ..., iₘ, and each inspection interval i₁, ..., iₘ may comprise a number n of subsections s₁, ..., sₙ. A first and second subsection 110, 120 may comprise at least one predetermined position on the paperboard web. The first subsection 110 may equal the first subsection s₁ in a first inspection interval i₁, and the second subsection 120 may equal the first subsection s₁ in a second inspection interval i₂.

The paperboard web 100 is fed S2 in a machine direction MD continuously, preferably at a substantially constant speed. The machine direction MD may be defined as the direction parallel to the movement of the paperboard web 100 through a manufacturing equipment such as a converting unit 200, or as the circumferential direction of a roll of paper used for providing the paperboard web 100.

Next, at least one master image may be captured of at least one master subsection 101 of the paperboard web, the master subsection being prior to the first and second subsections 110, 120 in the machine direction MD, as further illustrated in Fig. 2. The at least one master subsection 101 may comprise at least one predetermined position on the paperboard web. Alternatively, the master image may be provided by other means. The master image may for example be computer generated and/or computer modified. A digital-based image used for printing in the printing step S1b may be used as a master image for quality inspection. The master image may be color managed as further explained above. For instance, a white area of a digitally generated master image may be conversed to match with the appearance of white ink printed on paperboard. The master image(s) may be stored in a master image library. The at least one master image and the first and second test images may be captured using an inspection unit 230 as described above.

The method further comprises capturing S4a a first test image of a first subsection 110 of the paperboard web 100 and capturing S4b a second test image of a second subsection 120 of the paperboard web 100, the second subsection 120 being arranged remote from to the first subsection 110. As an example, the first subsection 110 may be equal to the first subsection s₁ in a first inspection interval i₁, and the second subsection 120 may be equal to the first subsection s1 in a second inspection interval i₂.

The first and second subsection 110, 120 may be separated in the machine direction MD by at least one third subsection 130 of which no test image is captured. As an example, the second, third and fourth subsections s₂, s₃, s₄ in the first inspection interval i₁ may each be a third subsection 130.

Since no test images are captured of the third subsection(s) between the first and second subsections 110, 120, the method of Fig. 4 can comprise idling S4c between capturing the first and second test images such that no intermediate images are captured therebetween. In particular, if capturing S4a the first test image of the first subsection 110 and capturing S4b the second test image of the second subsection 120 is performed by the same camera, the camera may be idled S4c between these steps. Idling S4c the camera means that no test image is captured by the camera during this idle time. However, the camera may still be turned on and possibly be used for other purposes.

Since the distance between the first and second subsections 110, 120 and the speed at which the paperboard web 100 is fed in the machine direction MD are typically known, capturing S4b of the second test image may be automatically triggered at a specific time after capturing S4a of the first test image. In other words, capturing of test images may be triggered with a specific frequency. This can be a reliable way of assuring that the intended sections of the paperboard web are captured.

Alternatively or additionally, capturing S4a, S4b of the first and/or second test image may be triggered by a specific mark printed on or prior to the first and/or second subsection 110, 120. The mark may be detected by the camera (even when the camera is idle) or other parts of the inspection unit 230 and subsequently trigger capturing of a test image. Preferably, the mark is printed on a section of the paperboard web which is configured to be at least partially hidden when a finished package is formed.

The method of Fig. 5 comprises an optional step of masking S5 a third subsection 130 of the paperboard web, the third subsection comprising no predetermined position. All subsections not comprising a predetermined position and hence a selected image motive may be masked, or concealed, advantageously reducing the data handling and processing time.

The quality of the printed series of images is determined in a step S6 where the first and second test image is compared with the at least one master image. As an example, the first and second test image may be compared to the same master image, or the first test image may be compared to a first master image and the second test image may be compared to a second master image. The at least one master image may be retrieved from the master image library and based on the image motive of the test image, it may be compared to a corresponding master image from the library.

From the description above follows that, although various embodiments of the invention have been described and shown, the invention is not restricted thereto but may also be embodied in other ways within the scope of the subject-matter defined in the following claims.

## Claims

1. A method for quality inspection of a series of printed images distributed along a machine direction (MD) of a paperboard web (100), each printed image being configured to form part of the décor for one or more packages, the method comprising:
feeding (S2) the printed paperboard web (100) continuously in the machine direction (MD),
capturing (S4a) a first test image of a first subsection (110) of the paperboard web (100) comprising at least part of a printed image in the series of printed images,
capturing (S4b) a second test image of a second subsection (120) of the paperboard web (100) comprising at least part of a printed image in the series of printed images, wherein the first and second subsections (110, 120) are separated in the machine direction (MD) by at least one third subsection (130) of which no test image is captured and each third subsection (130) comprises a printed image in the series of printed images,
determining (S6) the quality of the series of printed images by comparing the first and second test image with at least one master image.

2. Method according to claim 1, further comprising:
capturing (S3) the at least one master image of at least one master subsection (101) of the paperboard web, the at least one master subsection (101) being prior to the first and second subsections in the machine direction (MD).

3. Method according to claim 2, wherein the at least one master subsection (101) comprises at least one predetermined position on the paperboard web.

4. Method according to claim 1, wherein the at least one master image is a computer generated image.

5. Method according to any one of the preceding claims, wherein the printed paperboard web (100) is divided in the machine direction (MD) into a plurality of blanks, each blank being configured to form an individual package and comprising at least one of the printed images in the series of printed images, wherein each of the first, second and one or more third subsections (110, 120, 130) are located within one blank.

6. Method according to any one of the preceding claims, wherein capturing (S4a) the first test image of the first subsection (110) and capturing (S4b) the second test image of the second subsection (120) is performed by the same camera and the method further comprises idling (S4c) the camera between capturing (S4a) the first test image and capturing (S4b) the second test image such that no intermediate images are captured between the first and second test image.

7. Method according to any one of the preceding claims, wherein the second subsection (120) is arranged at a predetermined distance from the first subsection (110) in the machine direction (MD) and wherein capturing (S4b) the second test image of the second subsection is triggered at a specific time after capturing (S4a) the first test image of the first subsection (110),

8. Method according to any one of the preceding claims, wherein capturing (S4a) the first test image of the first subsection (110) and/or capturing (S4b) the second test image of the second subsection is triggered by a specific mark printed on or prior to the first and/or second subsection (110, 120) in the machine direction (MD).

9. Method according to any one of the preceding claims, further comprising:
selecting (S1a) one or more images from a plurality of motive images,
printing (S1b) the series of images on the paperboard web, wherein said selected one or more images forms part of the series and are printed at predetermined positions on the paperboard web,
wherein the first and second subsection (110, 120) comprises at least one predetermined position on the paperboard web.

10. Method according to claim 9, wherein printing (S1b) the series of images on the paperboard web comprises printing further images between the selected images in a random or pseudo-random order, wherein each third subsection (130) comprises one of said randomly ordered images.

11. Method according to any one of the preceding claims, wherein the series of printed images comprises variable images of more than one motive image.

12. Method according to any one of the preceding claims, wherein the paperboard web comprises a number (m) of inspection intervals (i₁, ..., iₘ), and each inspection interval (i₁, ..., iₘ) comprises a number (n) of subsections (s₁, ..., sₙ) wherein the first subsection (110) is the first subsection (s₁) in a first inspection interval (i₁), and the second subsection (120) is the first subsection (s₁) in a second inspection interval (i2).

13. Method according to claims 11 and 12, wherein the image in a first subsection (s₁) is repeated for each inspection interval (i₁, ..., iₘ).

14. Method according to claim 13, wherein the series of printed images comprises variable images repeating over each inspection interval (i₁, ..., iₘ).

15. Method according to any one of the preceding claims, wherein the first test image is compared to a first master image and the second test image is compared to a second master image

16. Method according to claim 15, wherein the first and second master image is retrieved from a master image library.

17. Method according to claim 16, wherein the at least one master image is color managed.

18. A converting unit (200) configured to continuously manufacture a laminated packaging material, comprising
a feeding unit (210) configured to continuously forward a printed paperboard web (100) in a machine direction (MD), wherein the paperboard web (100) has a series of printed images distributed along the machine direction (MD), each printed image being configured to form part of the décor for one or more packages,
an inspection unit (230) configured to capture a first test image of a first subsection (110) of the paperboard web (100), capture a second subsection (120) of the paperboard web (100) and not capture any test images of one or more third subsections (130) separating the first and second subsection (110, 120) in the machine direction (MD), wherein each of the first, second and one or more third subsections (130) comprises at least part of a separate printed image in the series of printed images and the inspection unit (230) is further configured to compare the first and second test images with at least one master image.

19. The converting unit according to claim 18, further comprising a printer unit (220) configured to print the paperboard web.

20. The converting unit according to claim 18 or 19, wherein the inspection unit (230) is further configured to capture the master image.

21. The converting unit according to any one of claims 18-20, wherein the printed paperboard web (100) comprises a cyclically repeated pattern of subsections (s1, ..., sₙ).

22. The converting unit according to claim 21, wherein the first and second test images are captured at specific intervals (i₁, ..., iₘ) within the cyclically repeated pattern of subsections (s₁, ..., _{Sn}).
